Europäisches Patentamt

European Patent Office

Office européen des brevets

(19)

(11) Veröffentlichungsnummer: **0 557 761 B1**

(12) **EUROPÄISCHE PATENTSCHRIFT**

(45) Veröffentlichungstag der Patentschrift: **19.07.95**

(51) Int. Cl.⁶: **C09K 5/00**

(21) Anmeldenummer: **93101788.3**

(22) Anmeldetag: **05.02.93**

(54) **Hartwasserstabile, phosphathaltige Kühlstoffmischungen.**

(30) Priorität: **18.02.92 DE 4204809**

(43) Veröffentlichungstag der Anmeldung:
**01.09.93 Patentblatt 93/35**

(45) Bekanntmachung des Hinweises auf die
Patenterteilung:
**19.07.95 Patentblatt 95/29**

(84) Benannte Vertragsstaaten:
**AT BE DE FR GB NL SE**

(56) Entgegenhaltungen:
**EP-A- 0 299 942**

**WORLD PATENTS INDEX (WPIL) (online), AC-
CESSION NO. 90-033 392, DERWENTPUBLI-
CATIONS LTD., London**

**WORLD PATENTS INDEX (WPIL) (online), AC-
CESSION NO. 90-040 944, DERWENTPUBLI-
CATIONS LTD., London**

(73) Patentinhaber: **BASF Aktiengesellschaft
Carl-Bosch-Strasse 38
D-67063 Ludwigshafen (DE)**

(72) Erfinder: **Pfitzner, Klaus, Dr.
Liebermannstrasse 6
W-6700 Ludwigshafen (DE)**
Erfinder: **Dehler, Juergen, Dr.
Im Eichenweg 4
W-6708 Neuhofen (DE)**
Erfinder: **Meszaros, Ladislaus
Londoner Ring 72
W-6700 Ludwigshafen (DE)**

EP 0 557 761 B1

**Beschreibung**

Die Erfindung betrifft hartwasserstabile, phosphathaltige Kühlstoffmischungen auf Glykolbasis, die frei sind von Nitriten, Silikaten, Aminen und Boraten.

Moderne Kühlstoffe für Verbrennungsmotoren enthalten meistens Glykole (Ethylen- oder Propylenglykol) als Hauptkomponente. Im Kühlsystem werden sie mit Wasser verdünnt und sollen neben Frostschutz auch für eine gute Wärmeabfuhr sorgen. Glykol/Wasser-Mischungen sind allerdings bei den hohen Betriebstemperaturen von Verbrennungsmotoren sehr korrosiv, und deswegen müssen die verschiedenen Metalle und deren Legierungen, die im Automobilkühlsystem vorkommen, ausreichend vor Korrosion geschützt werden.

Diese Aufgaben übernehmen die verschiedenen Additive (Korrosionsinhibitoren), welche in Kühlstoffen enthalten sind, z.B. Alkalinitrate, Alkalinitrite, Alkalisilikate, Benzoate, Alkanolamine, Phosphate, Triazole, u.a., neben Natrium- oder Calciumhydroxid und Alkaliboraten, die für eine ausreichende Alkalireserve sorgen, zur Neutralisation von sauren Oxidationsprodukten.

Solche Kühlstoffmischungen sind allgemein bekannt und beispielsweise in Ullmann "Enzyklopädie der technischen Chemie", 4. Auflage, Band 12, Seiten 205 ff., sowie Kirk-Othmer Encyclopedia of Chemical Technology 3rd Ed. 1979, Bd. 7, Seiten 133 ff., beschrieben.

Nitrite gehören zu den wirksamsten Korrosionsinhibitoren gegen Eisen-Korrosion, können allerdings mit sekundären Aminen unter Bildung von hochgiftigen Nitrosaminen reagieren. Dies kann insbesondere dann vorkommen, wenn verschiedene Kühlstoffqualitäten gemischt werden, was z.B. beim Nachfüllen im Autokühler der Fall sein kann.

Auch Phosphate vermitteln einen ausgezeichneten Korrosionsschutz für Eisenmetalle. Darüber hinaus schützen sie allein oder in Kombination mit Silikat wirkungsvoll Aluminiumlegierungen. Außerdem vermitteln Alkaliphosphate gleichzeitig eine ausreichende Alkalireserve.

Phosphathaltige Kühlstoffe weisen jedoch meistens pH-Werte im alkalischen Bereich auf und haben vor allem den Nachteil, daß beim Verdünnen mit Wasser höherer Härte Niederschläge auftreten, die zum Abbau von Phosphat in der Lösung und zu Störungen im Kühlsystem führen (schlechte Wärmeabfuhr, Kühlerverstopfung). In der neueren Patentliteratur werden deshalb phosphat- und nitritfreie Kühlstoffe beschrieben (z.B. DE 38 32 592), die Silikate enthalten und diese Nachteile nicht aufweisen und einen ausgezeichneten Korrosionsschutz vor allem gegenüber Aluminium auch bei hoher Temperaturbelastung bieten.

Höhere Temperaturen führen jedoch zu Problemen bezüglich der Stabilität der mitverwendeten Silikate, d.h. bei höheren Temperaturen bilden sich Silikat-Niederschläge, was zu den obengenannten Schwierigkeiten führt.

Aus der JP-OS 01-311099 (CA 112, 162047d) sind Frostschutzlösungen bekannt, die Phosphate, Nitrate, Benzoate, Molybdate, Mg-Verbindungen und Mercaptobenzothiazol enthalten. In diesen Lösungen bilden sich nach mehrtägier Lagerung jedoch ebenfalls Niederschläge, die äußerst störend sind.

Der vorliegenden Erfindung lag daher die Aufgabe zugrunde, Kühlstoffmischungen ("Kühlerschutzmittel") zur Verfügung zu stellen, die einen ausgezeichneten Hochtemperaturkorrosionsschutz für alle im Kühlsystem vorkommenden metallischen Werkstoffe liefern, dabei weder bei höheren Temperaturen noch bei längerer Lagerung oder bei Verdünnung mit Wasser höherer Härte einen Niederschlag bilden, und die frei sind von Nitriten, Silikaten, Aminen und Boraten.

Diese Aufgabe wird gelöst durch hartwasserstabile, phosphathaltige Kühlstoffmischungen auf Glykolbasis, die frei sind von Nitriten, Silikaten, Aminen und Boraten, und dadurch gekennzeichnet sind, daß sie enthalten

a) 0,5 bis 3 Gew.-% Ammonium- und/oder Alkaliphosphat

b) 2 bis 5,5 Gew.-% Ammonium- oder Alkalibenzoat

c) 0,2 bis 1,5 Gew.-% Ammonium- oder Alkalimolybdat

d) 0,2 bis 0,8 Gew.-% Ammonium- oder Alkalinitrat

e) 0,05 bis 0,4 Gew.-% Benzotriazol

f) 0,05 bis 0,4 Gew.-% Toluyltriazol

g) 0,005 bis 0,35 Gew.-% einer wasserlöslichen Magnesiumverbindung

h) 0,02 bis 0,5 Gew.-% einer oligomeren oder polymeren Carbonsäure mit einem Molekulargewicht von 1 000 bis 100 000,

i) 0,05 bis 5 Gew.-% Wasser

sowie die zur Ergänzung auf 100 Gew.-% erforderliche Menge Glykol.

Überraschenderweise zeigt sich, daß durch das Zusammenwirken der genannten Komponenten neben dem guten Korrosionsschutz auch erreicht wird, daß bei Zugabe von Wasser mit höheren Härtegraden (d.h.

mit Härtegraden über 14° dH, bzw. über 2,5 mmol Erdalkaliionen/l) keine Niederschläge auftreten, selbst wenn der Kühlstoff länger gelagert oder höheren Temperaturen ausgesetzt wird.

Unter Kühlstoffmischung gemäß Anspruch 1 ist die noch nicht gebrauchsfertig mit einer größeren Menge Wasser vermischte Formulierung auf Glykolbasis zu verstehen.

Besonders bevorzugt sind Kühlstoffmischungen, deren Komponente g) Magnesiumnitrat und/oder deren Komponente a) Dikaliumhydrogenphosphat und/oder bei denen in den Komponenten b), c) und d) die Alkaliionen Natrium sind.

Geeignete oligomere oder polymere Carbonsäuren mit einem Molekulargewicht ($M_n$, best.m.GPC) von 1 000 bis 100 000 sind zum Beispiel Polyacrylsäure, Oligomaleinsäure und Maleinsäure-Acrylsäure-Copolymere. Die oligomeren oder polymeren Carbonsäuren haben bevorzugt ein Molekulargewicht von 2 000 bis 10 000.

Als wasserlösliche Phosphate werden Ammonium- und/oder Alkaliphosphate eingesetzt, wobei die Phosphate sowohl als Ortho-, Meta- oder Pyrophosphate vorliegen können. Die Orthophosphate können als primäre, sekundäre und/oder tertiäre Phosphate vorliegen, wobei die sekundären Phosphate bevorzugt sind. Polyphosphate sind ebenfalls einsetzbar, da sie in wäßrigem Medium zu Orthophosphaten hydrolisieren. Als Alkaligegenionen sind Kalium und Natrium bevorzugt.

Als Molybdate werden an sich bekannte Molybdate oder z.B. Polymolybdate eingesetzt, wie sie in der EP 248 346 B1 beschrieben sind.

Die bevorzugten Mengen, in denen die erfindungsgemäßen Komponenten a) bis i) eingesetzt werden, sind wie folgt:
a) 1,0 bis 2,0 Gew.-%
b) 3,0 bis 5,0 Gew.-%
c) 0,3 bis 1,0 Gew.-%
d) 0,3 bis 0,7 Gew.-%
e) 0,1 bis 0,3 Gew.-%
f) 0,1 bis 0,3 Gew.-%
g) 0,01 bis 0,2 Gew.-%
h) 0,05 bis 0,3 Gew.-%
i) 0,2 bis 4 Gew.-%.

Als Glykol wird insbesondere Monoethylenglykol eingesetzt, aber auch andere Glykole, z.B. Diethylenglykol und/oder Propylenglykol, können zumindest als zusätzliche Komponenten mit vorliegen.

Die Kühlstoffmischung kann weitere an sich bekannte Komponenten enthalten, wie z.B. Antischaummittel oder Bitterstoffe.

Zur Bereitung des einsatzfertigen Kühlmediums versetzt man die erfindungsgemäße Kühlstoffmischung mit Wasser, wobei zweckmäßigerweise 10 bis 80 Vol-%ige, bevorzugt 20-60 Vol-%ige Lösungen in Wasser hergestellt werden.

Die erfindungsgemäßen Kühlstoffmischungen weisen bevorzugt einen pH-Wert von 7,5 bis 9,5 auf und zeigen z.B. eine Viskosität von etwa 30 $mm^2$/s (DIN 51562). Ihr Wassergehalt nach DIN 51123 beträgt zweckmäßigerweise 2-4 %. Sie sind beliebig mischbar nicht nur mit Wasser, sondern auch mit anderen, üblichen Kühlmedien. Der pour point einer 1:1-Mischung mit Wasser liegt unter -45°C (DIN 51583), der Gefrierpunkt einer derartigen Mischung unter -38°C (ASTM D 1177).

Beispiele

1. Es wurde eine erfindungsgemäße Kühlstoffmischung folgender Zusammensetzung hergestellt (Angaben jeweils in Gew.-%):
0,6 % Natriummolybdat x 2 $H_2O$
1,5 % Dikaliumhydrogenphosphat
0,15 % Polyacrylsäure MG 4000 (in 50 %iger wäßriger Lösung)
0,5 % Natriumnitrat
0,035% Magnesiumnitrat x 6 $H_2O$
4,5 % Natriumbenzoat
0,2 % Benzotriazol
0,2 % Toluyltriazol
0,01 % Bitterstoff Dinatoniumbenzoat
92,305% Monoethylenglykol
Die Mischung wies einen pH-Wert von 8,5 auf und die Alkalireserve betrug 10,5 ml min (ASTM D 1121).

3

2. Aus dieser Kühlstoffmischung wurde eine wäßrige Lösung bereitet, die 33 Vol.-% des Kühlstoffs enthielt. Mit diesem Kühlmedium wurden Korrosionstests nach ASTM D 1384-80 an Kupfer, Weichlot, Messing, Stahl, Grauguß und Gußaluminium durchgeführt und die Gewichtsabnahmen bestimmt.

Es wurden folgende Ergebnisse erhalten:

| Metalle oder Legierungen | | Gewichtsänderung in mg/cm$^2$ | |
|---|---|---|---|
| | | Meßwerte | Mittelwerte |
| Kupfer | F-Cu | -0,01/ + 0,04/ + 0,01 | + 0,01 |
| Weichlot | LSn30 | -0,02/-0,01/-0,03 | -0,02 |
| Messing | Ms63 | ±0,00/ + 0,01/ + 0,03 | + 0,01 |
| Stahl | H II | ±0,00/ + 0,06/ + 0,01 | + 0,02 |
| Grauguß | GG26 | -0,04/-0,07/-0,01 | -0,04 |
| Gußaluminium | GA1Si6Cu4 | -0,11/ + 0,05/-0,01 | -0,02 |

Außerdem wurde mit einer 25 Vol.-%igen Lösung des Kühlstoffs gemäß 1. in Wasser ein Heat-transfer-Test gemäß ASTM D 4340-84 durchgeführt. Folgendes Ergebnis wurde erhalten:

| Prüfmetall: | Gewichtsänderung in mg/ cm$^2$/ Woche | |
|---|---|---|
| | Meßwerte | Mittelwert |
| Gußaluminium GA1Si6Cu4 | + 0,18/ + 0,13 | + 0,16 |

3. Vergleichsmischung nach JP-OS 01-311099

Als Vergleichsmischung wurde gemäß der JP-OS 01-311099 folgende Mischung hergestellt (jeweils Gew.-%):

0,4 % Natriummercaptobenzotriazol

0,5 % Natriummolybdat

0,4 % Natriumnitrat

0,02 % Magnesiumnitrat

5,0 % Natriumbenzoat

1,0 % KOH

1,5 % $H_3PO_4$

91,18 % Monoethylenglykol (95 % MEG + 5 % $H_2O$)

Die Mischung wurde mit 0,09 Gew.-% 85 %iger $H_3PO_4$ auf einen pH-Wert von 8,5 eingestellt.

4. Folgende Lagerversuche wurden durchgeführt:

a) Lagerversuche der Konzentrate, 7d/60°C

b) Lagerversuche von 40 Vol-%igen Lösungen in 20° dH-Wasser, 7d/90°C

Ergebnisse:

a) Lagerversuche der Konzentrate 7d/60°C

| | Erfindungsgem. Kühlstoff (nach 1.) | Kühlstoff gem. JP-OS 311099 (nach 3.) |
|---|---|---|
| Aussehen:<br>vor Test | farblos, klar | farblos, klar; während Lagerung bei RT heller Bodensatz |
| nach Test | gelblich, klar | farblos, klar; weißer, kristall. Bodensatz |
| Bodensatz nach Test, Vol. %:<br>bei 60°C<br>bei RT | kein<br>kein | 1,5 (+an Gefäßwand)<br>6,5 |
| Trockenrückstand, mg/100 ml Lösung | --- | 1 360 |

b) Lagerversuche mit 40 Vol-%igen Lösungen in 20° dH-Wasser, 7d/90°C

| | Erfindungsgem. Kühlstoff (nach 1.) | Kühlstoff gem. JP-OS 311099 (nach 3.) |
|---|---|---|
| Aussehen:<br>vor Test | farblos, klar | farblos, klar; während Lagerung bei RT heller Bodensatz |
| nach Test | farblos, klar | farblos, klar; weißer, durchscheinender Bodensatz |
| Bodensatz nach Test, Vol. %:<br>bei 60°C<br>bei RT | kein<br>kein | 7<br>7 |
| Trockenrückstand, mg/100 ml Lösung | --- | 98,8 |

(Zur Bestimmung des Trockenrückstandes wurden die Lösungen über Schwarzbandfilter Nr. 589.1 / 0,00003 gr filtriert. Der Rückstand wurde 4 h bei 60°C getrocknet.)

Aus den Beispielen ergibt sich, daß die erfindungsgemäßen Kühlstoffmischungen nicht nur eine ausgezeichnete Korrosionsschutzwirkung aufweisen, sondern trotz des Phosphatgehalts auch eine sehr gute

EP 0 557 761 B1

Lagerstabilität zeigen, so daß auch bei Verdünnung mit Wasser höherer Härte keine Niederschläge auftreten.

**Patentansprüche**

1. Hartwasserstabile, phosphathaltige Kühlstoffmischungen auf Glykolbasis, die frei sind von Nitriten, Silikaten, Aminen und Boraten, dadurch gekennzeichnet, daß sie enthalten
   a) 0,5 bis 3 Gew.-% Ammonium- und/oder Alkaliphosphat
   b) 2 bis 5,5 Gew.-% Ammonium- oder Alkalibenzoat
   c) 0,2 bis 1,5 Gew.-% Ammonium- oder Alkalimolybdat
   d) 0,2 bis 0,8 Gew.-% Ammonium- oder Alkalinitrat
   e) 0,05 bis 0,4 Gew.-% Benzotriazol
   f) 0,05 bis 0,4 Gew.-% Toluyltriazol
   g) 0,005bis 0,35 Gew.-% einer wasserlöslichen Magnesiumverbindung
   h) 0,02 bis 0,5 Gew.-% einer oligomeren oder polymeren Carbonsäure mit einem Molekulargewicht von 1 000 bis 100 000,
   i) 0,05 bis 5 Gew.-% Wasser
   sowie die zur Ergänzung auf 100 Gew.-% erforderliche Menge Glykol.

2. Kühlstoffmischungen nach Anspruch 1, dadurch gekennzeichnet, daß die Komponente g) Magnesiumnitrat und/oder die Komponente h) Polyacrylsäure mit einem Molekulargewicht von 2 000 bis 10 000 ist.

3. Kühlstoffmischungen nach Anspruch 1, dadurch gekennzeichnet, daß das Alkaliion in Komponente a) Kalium und/oder die Alkaliionen in den Komponenten b), c) und d) Natrium sind.

4. Kühlstoffmischungen nach Anspruch 1, dadurch gekennzeichnet, daß die genannten Komponenten a) bis i) in folgenden Mengen enthalten sind:
   a) 1,0 bis 2,0 Gew.-%
   b) 3,0 bis 5,0 Gew.-%
   c) 0,3 bis 1,0 Gew.-%
   d) 0,3 bis 0,7 Gew.-%
   e) 0,1 bis 0,3 Gew.-%
   f) 0,1 bis 0,3 Gew.-%
   g) 0,01 bis 0,2 Gew.-%
   h) 0,05 bis 0,3 Gew.-%
   i) 0,2 bis 4 Gew.-%.

5. Einsatzfertiges Kühlmedium, das aus 10 bis 80 Vol-% der Kühlstoffmischung gemäß Anspruch 1 und 90 - 20 Vol.-% Wasser besteht.

**Claims**

1. A phosphate-containing and glycol-based coolant mixture which is stable in hard water and is free of nitrites, silicates, amines and borates, which contains
   a) 0.5 - 3% by weight of ammonium and/or alkali metal phosphate
   b) 2 - 5.5% by weight of ammonium or alkali metal benzoate
   c) 0.2 - 1.5% by weight of ammonium or alkali metal molybdate
   d) 0.2 - 0.8% by weight of ammonium or alkali metal nitrate
   e) 0.05 - 0.4% by weight of benzotriazole
   f) 0.05 - 0.4% by weight of toluyltriazole
   g) 0.005 - 0.35% by weight of a water-soluble magnesium compound
   h) 0.02 - 0.5% by weight of an oligomeric or polymeric carboxylic acid with a molecular weight of 1,000 - 100,000,
   i) 0.05 - 5% by weight of water
   and the amount of glycol necessary to make up to 100% by weight.

2. A coolant mixture as claimed in claim 1, wherein component g) is magnesium nitrate and/or component h) is polyacrylic acid with a molecular weight of 2,000 - 10,000.

6

3. A coolant mixture as claimed in claim 1, wherein the alkali metal ion in component a) is potassium and/or the alkali metal ions in components b), c) and d) are sodium.

4. A coolant mixture as claimed in claim 1, which contains the said components a) to i) in the following amounts:
   a) 1.0 - 2.0% by weight
   b) 3.0 - 5.0% by weight
   c) 0.3 - 1.0% by weight
   d) 0.3 - 0.7% by weight
   e) 0.1 - 0.3% by weight
   f) 0.1 - 0.3% by weight
   g) 0.01 - 0.2% by weight
   h) 0.05 - 0.3% by weight
   i) 0.2 - 4% by weight.

5. A coolant medium ready for use which consists of 10 - 80% by volume of a coolant mixture as claimed in claim 1 and 90 - 20% by volume of water.

**Revendications**

1. Mélanges de produits réfrigérants contenant du phosphore, stables vis-à-vis de l'eau dure, à base de glycol, qui sont dépourvus de nitrites, de silicates, d'amines et de borates, caractérisés en ce qu'ils contiennent
   a) 0,5 à 3% en poids de phosphate d'ammonium et/ou de métal alcalin,
   b) 2 à 5,5% en poids de benzoate d'ammonium ou de métal alcalin,
   c) 0,2 à 1,5% en poids de molybdate d'ammonium ou de métal alcalin,
   d) 0,2 à 0,8% en poids de nitrate d'ammonium ou de métal alcalin,
   e) 0,05 à 0,4% en poids de benzotriazole,
   f) 0,05 à 0,4% en poids de toluyltriazole,
   g) 0,005 à 0,35% en poids d'un composé du magnésium soluble dans l'eau,
   h) 0,02 à 0,5% en poids d'un acide carboxylique oligomérique ou polymérique, d'un poids moléculaire de 1 000 à 100 000,
   i) 0,05 à 5% en poids d'eau
   la quantité nécessaire de glycol pour compléter le mélange jusqu'à 100% en poids.

2. Mélanges de produits réfrigérants suivant la revendication 1, caractérisés en ce que le composant g) est le nitrate de magnésium et/ou le composant h) est le poly(acide acrylique) d'un poids moléculaire de 2 000 à 10 000.

3. Mélanges de produits réfrigérants suivant la revendication 1, caractérisés en ce que l'ion de métal alcalin dans le composant a) est le potassium et/ou les ions de métaux alcalins dans les composants b), c) et d) sont le sodium.

4. Mélanges de produits réfrigérants suivant la revendication 1, caractérisés en ce que les composants a) à i) susmentionnés y sont contenus en les proportions suivantes :
   a) 1,0 à 2,0% en poids
   b) 3,0 à 5,0% en poids
   c) 0,3 à 1,0% en poids,
   d) 0,3 à 0,7% en poids
   e) 0,1 à 0,3% en poids
   f) 0,1 à 0,3% en poids
   g) 0,01 à 0,2% en poids
   h) 0,05 à 0,3% en poids
   i) 0,2 à 4% en poids.

5. Agent réfrigérant prêt à l'emploi, qui est constitué de 10 à 80% en volume du mélange de produits réfrigérants suivant la revendication 1 et de 90 à 20% en volume d'eau.